(19) Europäisches Patentamt
European Patent Office
Office européen des brevets

(11) **EP 4 411 383 A1**

(12) **EUROPEAN PATENT APPLICATION**
published in accordance with Art. 153(4) EPC

(43) Date of publication:
**07.08.2024 Bulletin 2024/32**

(21) Application number: **22875822.3**

(22) Date of filing: **13.09.2022**

(51) International Patent Classification (IPC):
**G01N 35/02** *(2006.01)*     **G01N 35/00** *(2006.01)*

(52) Cooperative Patent Classification (CPC):
**G01N 35/00; G01N 35/02**

(86) International application number:
**PCT/JP2022/034262**

(87) International publication number:
**WO 2023/053951 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2021  JP 2021157808**

(71) Applicant: HITACHI HIGH-TECH CORPORATION
Tokyo 105-6409 (JP)

(72) Inventors:
• **FUKAYA Naohiko**
**Tokyo 105-6409 (JP)**
• **ITO Masayuki**
**Tokyo 105-6409 (JP)**
• **AKUTSU Masashi**
**Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **AUTOMATIC ANALYSIS DEVICE AND OPERATION METHOD THEREOF**

(57)   Provided is an automatic analyzer including: an operation terminal; an analyzer having an active examination function of executing, in parallel with an initial examination, a re-examination possibly required after the initial examination on the same specimen; and a computer configured to communicate with the analyzer, in which the computer executes determination processing as to whether an analysis time is shorter when the active examination function is enabled than when the active examination function is disabled based on performance data of an examination executed in the past, and outputs determination data of the determination processing to the operation terminal or the analyzer.

[FIG. 1]

EP 4 411 383 A1

**Description**

Technical Field

The present invention relates to an automatic analyzer and an operation method thereof that automatically analyze a plurality of specimens (biological samples) in a clinical examination.

Background Art

In an analysis of a specimen related to disease diagnosis, when a value of an initial examination is high, the same or different analysis items may be analyzed in a re-examination. PTL 1 discloses a technique of executing a re-examination with preset conditions together with an initial examination to shorten an analysis time for an urgent specimen that needs to be urgently analyzed.

Citation List

Patent Literature

PTL 1: JPH03-172764A

Summary of Invention

Technical Problem

It is also conceivable to apply the technique disclosed in PTL 1 not only to the urgent specimen but also to a general specimen. However, in the technique in PTL 1, an examination equivalent to a re-examination is executed at the time of the initial examination regardless of necessity, but there is a specimen that does not need to be re-examined. Therefore, the analysis equivalent to the re-examination is uniformly executed for all the urgent specimens at the time of the initial examination, and as a result, many unnecessary examinations are executed and time will be wasted on the unnecessary examinations.

An object of the invention is to provide an automatic analyzer and an operation method thereof capable of determining whether a re-examination needs to be executed on the same specimen together with an initial examination and reducing an analysis time by preventing the execution of the re-examination beyond necessity.

Solution to Problem

To achieve the object described above, the invention provides an automatic analyzer including an operation terminal, an analyzer having an active examination function of executing, in parallel with an initial examination, a re-examination capable of being required after the initial examination on the same specimen, and a computer configured to communicate with the analyzer, in which the computer executes determination processing as to whether an analysis time is shorter when the active examination function is enabled than when the active examination function is disabled based on performance data of an examination executed in the past, and outputs determination data of the determination processing to the operation terminal or the analyzer.

Advantageous Effects of Invention

According to the invention, it is possible to determine whether a re-examination needs to be executed together with the initial examination on the same specimen and to shorten the analysis time by preventing the execution of a re-examination beyond necessity.

Brief Description of Drawings

[FIG. 1] FIG. 1 is a schematic diagram showing a configuration example of an automatic analyzer according to a first embodiment of the invention.
[FIG. 2] FIG. 2 is a schematic diagram showing a configuration example of an analyzer constituting the automatic analyzer according to the first embodiment of the invention.

[FIG. 3] FIG. 3 is a diagram showing an example of a data table of examination performance data.

[FIG. 4] FIG. 4 is a diagram showing an example of a data table of analysis time statistical data.

[FIG. 5] FIG. 5 is a diagram showing an example of an active examination setting screen.

[FIG. 6] FIG. 6 is a Gantt chart showing an example of a progress of processing of an operation when an active examination is not executed.

[FIG. 7] FIG. 7 is a Gantt chart showing an example of a progress of processing of the operation when the active examination is executed.

[FIG. 8] FIG. 8 is a Gantt chart showing an example of a progress of processing of an operation when the active examination is not executed.

[FIG. 9] FIG. 9 is a conceptual diagram of learned data used in an automatic analyzer according to a third embodiment of the invention.

[FIG. 10] FIG. 10 is a conceptual diagram of learned data used in an automatic analyzer according to a fourth embodiment of the invention.

Description of Embodiments

Hereinafter, embodiments according to the invention will be described with reference to the drawings.

(First Embodiment)

1. Automatic Analyzer

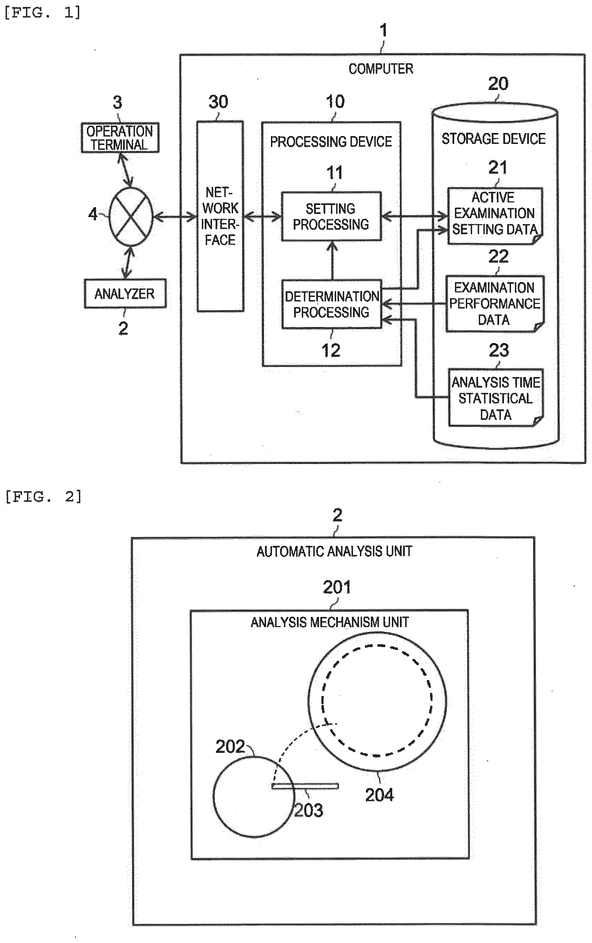

FIG. 1 is a schematic diagram showing a configuration example of an automatic analyzer according to a first embodiment of the invention. An analyzer 2 of the automatic analyzer shown in FIG. 1 has an active examination function. An active examination is a function of executing, in parallel with an initial examination, a re-examination that may be required after the initial examination on the same specimen. When a setting of the active examination is enabled, the re-examination is expected to be executed in parallel with the initial examination regardless of necessity in the analyzer 2. When the setting of the active examination is disabled, in the analyzer 2, the re-examination is executed as necessary after the initial examination, and the re-examination is not executed when the re-examination is not necessary after the initial examination. The re-examination is one of an examination in which the same item as that in the initial examination is executed under the same condition, an examination in which the same item as that in the initial examination is executed by changing a condition such as a dilution rate, and an examination for an item different from that in the initial examination, and is set in advance.

As shown in FIG. 1, the automatic analyzer includes a computer 1, the analyzer 2, and an operation terminal 3. The operation terminal 3 is a terminal serving as a user interface of the automatic analyzer and may include a computer including a processing device such as a CPU and a storage device such as an HDD, a monitor, and an input device. When the operation terminal 3 does not require a calculation function, the operation terminal 3 may include only a monitor and an input device, and may display and input of data.

2. Analyzer

FIG. 2 is a schematic diagram showing a configuration example of the analyzer 2. The analyzer 2 includes at least one analysis mechanism unit 201 and a transport line (not shown) for transporting a specimen. The analysis mechanism unit 201 includes a large number of devices such as a reaction disk 204, a reagent disk 202, a specimen probe (not shown), and a reagent probe 203. The reaction disk 204 is a disk-shaped transport device that is mounted with a plurality of reaction cells (not shown) for measuring a specific component by chemically reaching a specimen with a reagent and moves the reaction cells to a predetermined position. The reagent disk 202 is a disk-shaped transport device that is mounted with a plurality of reagent containers (not shown) and moves the reagent containers to a predetermined position. The specimen probe is a dispensing device that dispenses the specimen from the specimen container (test tube) to the reaction cell. The reagent probe 203 is a dispensing device that dispenses the reagent from the reagent container to the reaction cell.

The specimen container is transported to the analysis mechanism unit 201 via the transport line. In the analysis mechanism unit 201, the specimen is aspirated from the specimen container by the specimen probe, and the aspirated specimen is dispensed into the reaction cell transported to the predetermined position by the reaction disk 204. Meanwhile, the reagent is aspirated by the reagent probe 203 from a predetermined reagent container transported to the predetermined position by the reagent disk 202, and the aspirated reagent is dispensed into the reaction cell and mixed with the specimen. A reaction container containing the specimen chemically reacted with the reagent in the reaction container is irradiated with light from a light source lamp (not shown), and the specific component of the specimen is measured by a change in absorbance observed by an absorbance sensor (not shown) to analyze the specimen.

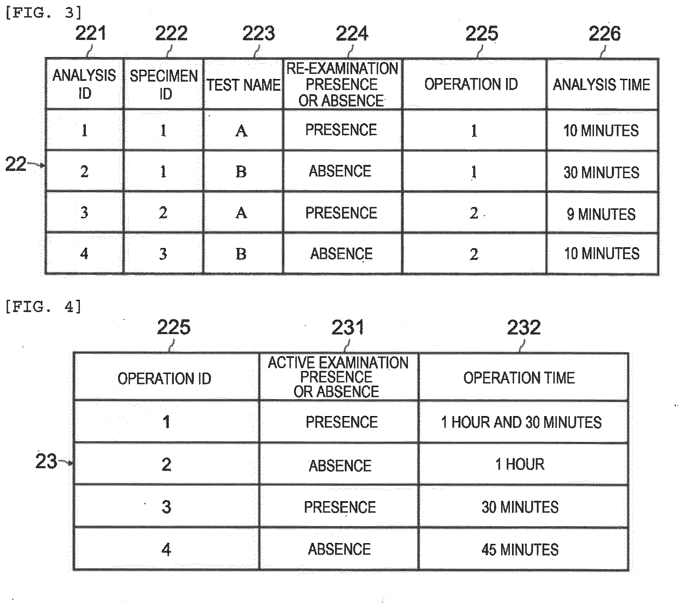

An analysis result by the analyzer 2 is transmitted as performance data to the computer 1 via a network 4 and a network interface 30. The performance data transmitted from the analyzer 2 to the computer 1 includes examination performance data 22 (FIGS. 1 and 3) and analysis time statistical data 23 (FIGS. 1 and 4). The examination performance data 22 and the analysis time statistical data 23 input to the computer 1 are stored and accumulated in a storage device 20 (FIG. 2).

2-1. Examination Performance Data

FIG. 3 is a diagram showing an example of a data table of the examination performance data 22. The examination performance data 22 is history data of examinations executed in the past by the analyzer 2. As the examination performance data 22, in addition to or instead of past data by the analyzer 2, past data by at least one analyzer of the same or equivalent model as the analyzer 2 may be used. The data table of the examination performance data 22 includes an analysis ID 221, a specimen ID 222, a test name 223, re-examination presence or absence 224, an operation ID 225, and an analysis time 226.

The analysis ID 221 is a unique ID assigned to each analysis executed by the analyzer 2.

The specimen ID 222 is a unique ID assigned to each specimen (each patient).

The test name 223 is a name defined in advance for each analysis type.

The re-examination presence or absence 224 is a value indicating whether the re-examination is executed for each analysis ID 221, and data of "presence" or "absence" is alternatively registered. For example, an analysis ID "1" in the example in FIG. 3 indicates that not only the initial examination but also the re-examination is executed on a specimen ID "1", and it is indicated that an analysis of an analysis ID "2" is completed only with the initial examination on the specimen ID "1".

The operation ID 225 is a unique ID assigned to an operation (work unit that works once continuously) of the analyzer 2. One operation ID 225 includes a plurality of analysis IDs. The operation ID 225 is automatically assigned according to a rule preset by the analyzer 2.

The analysis time 226 is a time from an analysis start time to an analysis end time for each analysis ID 221 (a required time of the analysis ID 226). In an analysis in which the re-examination is executed, a total time of the initial examination and the re-examination is recorded.

2-2. Analysis Time Statistical Data

FIG. 4 is a diagram showing an example of a data table of the analysis time statistical data 23. The analysis time statistical data 23 is data regarding a time required for an analysis executed in the past by the analyzer 2 and a setting of the active examination. As the analysis time statistical data 23, in addition to or instead of past data by the analyzer 2, past data by at least one analyzer of the same or equivalent model as the analyzer 2 may be used. The data table of the analysis time statistical data 23 includes the operation ID 225 (which is the same as the operation ID 225 of the examination performance data 22), active examination presence or absence 231, and an operation time 232.

The operation ID 225 is the same information as the operation ID 225 of the examination performance data 22.

The active examination presence or absence 231 is data representing a performance of whether an operation specified by the operation ID 225 is executed with the active examination function enabled or disabled.

The operation time 232 is a time (actual required time of the operation ID 225) required from a start time to an end time of the operation specified by the operation ID 225.

3. Computer

The computer 1 has a function of executing determination processing as to whether to enable or disable the active examination function. To execute the determination processing, the computer 1 calculates, based on the examination performance data 22, an expected value of the number of analyses in the re-examination (the number of analyses N2 to be described later) based on a ratio R of analyses that transition to the re-examination after the initial examination is executed (to be described later). Then, for a plurality of predetermined analyses (operations in the present example), the computer 1 executes the determination processing as to whether the total analysis time is shorter when the active examination function is enabled than when the active examination function is disabled. In the present embodiment, determination data (determination result) of the determination processing is output to the operation terminal 3 as a recommendation setting of the active examination.

As shown in FIG. 1, the computer 1 includes a processing device 10, the storage device 20, and the network interface 30. The computer 1 is connected to the network 4 and can communicate with the analyzer 2 and the operation terminal 3 via the network 4. The network 4 may include a wide area network such as the Internet and a LAN, but the network 4 may be implemented by a simple cable for data transmission. The computer 1 may be a single computer or a plurality of computers that can communicate with one another.

3-1. Processing Device

The processing device 10 executes a program stored in the storage device 20 to execute various control and calculation processing. Specific examples of the processing device include one or more central processing units (CPUs). The processing device 10 executes, according to the program stored in the storage device 20, setting processing 11 of alternatively switching between enabling (ON) and disabling (OFF) settings for the active examination function, and determination processing 12 of determining which of the enabling and disabling settings is the recommendation setting. The setting processing 11 according to the present embodiment is processing of storing active examination setting data 21 set by an operator with the operation terminal 3 in the storage device 20. Further, the determination processing 12 according to the present embodiment is processing of generating, based on the examination performance data 22 and the analysis time statistical data 23, recommendation information for causing the operator to know which of the enabling and disabling settings of the active examination function is recommended from a viewpoint of shortening a total analysis time of the predetermined number of specimens.

The processing device 10 may be implemented by, for example, a single CPU or a plurality of CPUs. When the processing device 10 is implemented by a plurality of CPUs, the setting processing 11 and the determination processing 12 may be shared by separate CPUs. In this case, the plurality of CPUs may be mounted on a single computer or may be mounted on separate computers. Further, when a computer is used as the operation terminal 3, the setting processing 11 may be executed by the operation terminal 3.

3-2. Storage Device

The storage device 20 permanently stores programs and data, and is implemented by, for example, one or more HDDs or SSDs. The storage device 20 stores the active examination setting data 21, the examination performance data 22, and the analysis time statistical data 23. The active examination setting data 21 is alternative data for setting the active examination function to be enabled or disabled, when enabled data is stored as the active examination setting data 21, the active examination function is enabled, and when disabled data is stored, the active examination function is disabled. Although the examination performance data 22 and the analysis time statistical data 23 are described above, for example, data for a latest setting period (or a designated storage capacity) is stored in the storage device 20.

The storage device 20 may be implemented by, for example, a single HDD or a plurality of HDDs. When the storage device 20 is implemented by a plurality of HDDs, the active examination setting data 21, the examination performance data 22, and the analysis time statistical data 23 may be shared and stored by the plurality of HDDs. In this case, the plurality of HDDs may be mounted on or connected to a single computer or may be mounted on or connected to separate computers. When a computer is used as the operation terminal 3, a part of the active examination setting data 21, the examination performance data 22, and the analysis time statistical data 23 (for example, the active examination setting data 21) may be stored in an HDD mounted on or connected to the operation terminal 3. Further, the storage device 20 may be an external storage device accessible by the computer 1 such as a data server.

3-3. Network Interface

The network interface 30 is an input and output unit for transmitting and receiving data to and from the analyzer 2 and the operation terminal 3 via the network 4. The data output from the operation terminal 3 and the analyzer 2 is input to the computer 1 via the network 4 and the network interface 30. The data output from the computer 1 is input to the operation terminal 3 and the analyzer 2 via the network interface 30 and the network 4. For example, the examination performance data 22 and the analysis time statistical data 23 described above are input from the analyzer 2 to the computer 1 via the network 4 and the network interface 30 when the analysis result is output from the analyzer 2.

3-4. Setting Processing

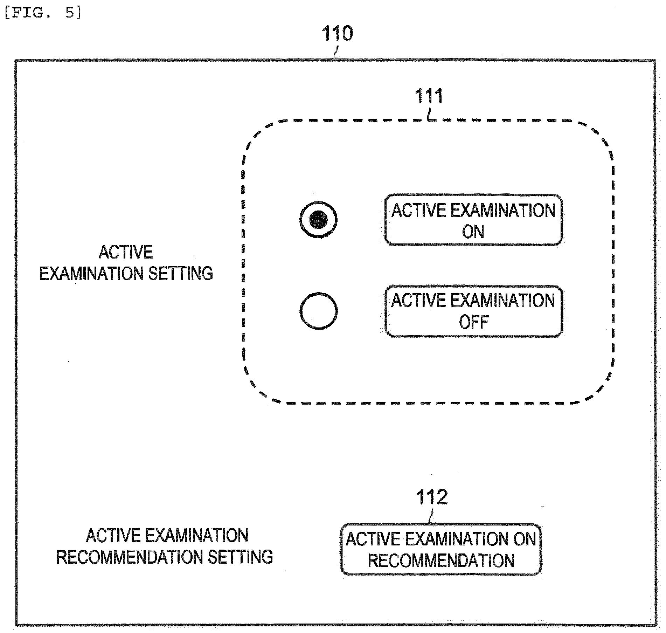

FIG. 5 is a diagram showing an example of an active examination setting screen displayed on the operation terminal 3 by the processing device 10 in the setting processing 11. The active examination setting screen 110 shown in FIG. 5 displays an active examination recommendation setting 112 and an active examination setting radio button 111.

The active examination recommendation setting 112 is a user interface for displaying the recommendation setting of the active examination (whether it is better to enable or disable the active examination function from the viewpoint of shortening the analysis time). The recommendation setting of the active examination is determined by executing the determination processing 12 (to be described later) under a current condition in the computer 1 and is displayed on the active examination setting screen 110 of the operation terminal 3 when the data is received from the computer 1.

FIG. 5 shows an example in which an "active examination ON recommendation" is displayed in the active examination recommendation setting 112, which is an example in which the operator is recommended to enable the active examination function as displayed. In this case, it indicates that the computer 1 determines a situation in which the analysis time of the analyzer 2 is shorter when the active examination function is enabled as a result of executing the determination processing 12.

On the other hand, for example, by displaying an "active examination OFF recommendation" in the active examination recommendation setting 112, the operator is recommended to disable the active examination function. In this case, it indicates that the computer 1 determines a situation in which the analysis time of the analyzer 2 is shorter when the active examination function is disabled as a result of executing the determination processing 12.

The active examination setting radio button 111 is a user interface through which the operator inputs (switches) a setting of enabling or disabling the active examination function. The active examination setting radio button 111 is set to enable the active examination setting data 21 when the operator selects enabling of the active examination. When the operator selects the disabling of the active examination, the active examination setting data 21 is set to be disabled. The display of the active examination recommendation setting 112 is used as a reference for the setting of enabling and disabling.

The active examination setting data 21 set in this way is transmitted from the operation terminal 3 to the computer 1. In the computer 1, the setting processing 11 is executed by the processing device 10 based on the setting of enabling or disabling the received active examination setting data 21, the setting of the active examination setting data 21 in the storage device 20 is updated, and the active examination setting data 21 is transmitted to the analyzer 2. When the active examination setting data 21 is enabled, the analyzer 2 executes the active examination for each analysis and executes the initial examination and the re-examination on the same specimen before transitioning to the analysis of the next specimen. On the other hand, when the active examination setting data 21 is disabled, a transition is made to the analysis of the next specimen without executing the re-examination on the same specimen after the initial examination.

3-5. Determination Processing

The computer 1 is configured to execute the determination processing 12 by the processing device 10, determine the recommendation setting of enabling or disabling the active examination, and output the determination result to the operation terminal 3. In the present embodiment, when the computer 1 determines in the determination processing 12 that the analysis time is shortened by enabling the active examination function, the computer 1 outputs a recommendation setting of recommending to enable the active examination function to the operation terminal 3. On the other hand, when the computer 1 determines in the determination processing 12 that the analysis time is not shortened even when the active examination function is enabled, the computer 1 outputs a recommendation setting of recommending to disable the active examination function to the operation terminal 3. The analysis time to be compared here may be a time required for analyzing the entire analysis request input (reserved) currently or a time required for analyzing an operation to be executed next.

For example, the computer 1 executes the determination processing 12 in the processing device 10, and when the following conditional expressions 1A and 1B are both satisfied, the computer 1 determines that it is recommended to enable the active examination function. When at least one of the conditional expressions 1A or 1B is not satisfied, the processing device 10 determines that it is recommended to disable the active examination function.

$$T1 + T2 + T3 \times (N2 + 1) > T3 \times N1 \times 2 \quad (1A)$$

$$T1 + T2 > T3 \times (N1 - 1) \quad (1B)$$

T1: transport time per specimen,
T2: reaction time per specimen,
T3: dispensing time per specimen,
N1: the number of analyses (input values) in the initial examination,
N2: the number of analyses (expected values) in the re-examination

T1, T2, and T3 are invariable constants determined in the analyzer 2. The number of analyses in the initial examination N1 is a value included in analysis request data input from the operation terminal 3 to the analyzer 2, and is stored in a storage device of a control device of the analyzer 2 when the analysis request data is input. When the computer 1 executes the determination processing 12 in the processing device 10, the computer 1 can acquire a value of N1 from the analyzer 2 via the network interface 30.

The conditional expressions 1A and 1B will be sequentially described below.

3-5-1. For Conditional Expression 1A

The conditional expression 1A is defined based on a condition that an entire required time Ton when the active examination is executed is shorter than an entire required time Toff when the active examination is not executed.

-Entire Required Time Toff-

The entire required time Toff when the active examination is not executed can be expressed by the following Equation 2.

$$Toff = Ta + Tb - Tc \quad (2)$$

However, Ta is an entire required time for the initial examination, Tb is an entire required time for the re-examination, and Tc is an overlapping time of Ta and Tb.

Ta, Tb, and Tc are respectively defined as follows.

$$Ta = T1 + T3 \times N1 + T2$$

$$Tb = T1 + T3 \times N2 + T2$$

$$Tc = T3 \times (N1 - 1)$$

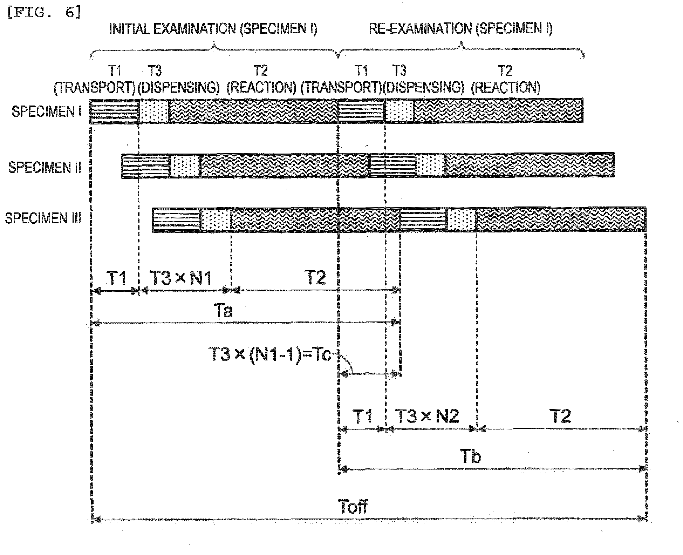

To describe Equation 2, FIG. 6 shows a Gantt chart representing an example of a progress of processing of an operation when the active examination is not executed. For the sake of simplicity, FIG. 6 shows an example in which all three specimens I, II, and III are subjected to the re-examination after the initial examination in an operation including analyses of the specimens I, II, and III.

When the active examination is not executed, first, the initial examination is executed on all of the specimens I, II, and III. For the specimens I, II, and III, a transport step, a dispensing step, and a reaction step are sequentially executed. The transport step and the reaction step can be executed in parallel, but when the same probe is used for the specimens I, II, and III, the dispensing step cannot be executed in parallel, and it is necessary to stagger the time. Therefore, as can be seen from FIG. 6, it is understood that the required time Ta from when the initial examinations of the specimens I, II, and III are stated to when an examination result is output can be expressed by Ta = T1 + T3 × N1 + T2 as described above. Similarly, the required time Tb of the re-examination executed after the result of the initial examination is output is expressed by Tb = T1 + T3 × N2 + T2 as described above.

Further, once the result of the initial examination of the specimen I is output, the re-examination of the initial specimen I can be started even before an output of results of the initial examinations of the specimens II and III, and the specimens II and III can also sequentially transition to the re-examination after the initial examination. Since the overlapping time Tc between the initial examination and the re-examination described above is equal to a time difference between the analysis steps of the specimens I and III in the initial examination, it is understood that Tc = T3 × (N1 - 1) as described above.

Accordingly, the entire required time Toff of the processing of the operation when the active examination is not executed can be expressed by Equation 2 described above.

-Entire Required Time Ton-

The entire required time Ton when the active examination is executed can be expressed by the following Equation 3.

$$Ton = T1 + T3 \times N1 \times 2 + T2 \quad (3)$$

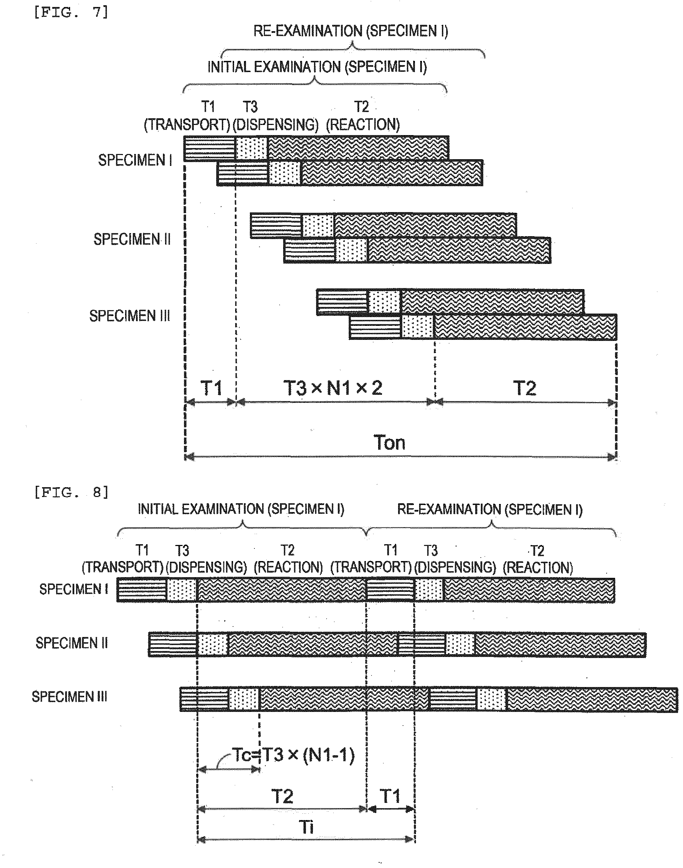

To describe Equation 3, FIG. 7 shows a Gantt chart representing an example of a progress of processing of an operation when the active examination is executed. FIG. 7 shows an operation including analyses of the specimens I, II, and III in accordance with FIG. 6.

When the active examination is executed, the dispensing step of the re-examination is executed following the dispensing step of the initial examination for each of the specimens I, II, and III. A total of six dispensing steps including the initial examination and the re-examination of the specimens I, II, and III are continuously executed. Therefore, as can be seen from FIG. 7, it is understood that the entire required time Ton for the processing of the operation when the active examination is executed can be expressed by Equation 3 described above.

When Toff > Ton is converted into an equation, the above-described conditional expression 1A is obtained.

-Prediction of Number of Analyses in Re-examination-

To determine the recommendation setting of enabling or disabling the active examination, it is necessary to predict the number of analyses in the re-examination N2. In a process of executing the determination processing 12 by the processing device 10, the computer 1 predicts the number of analyses in re-examination N2 based on the examination performance data 22.

The number of analyses predicted in the re-examination N2 can be obtained by the following equation.

$$N2 = N1 \times R$$

R: ratio of transitions to the re-examination among analyses in the initial examination

The ratio R is calculated by the following equation based on the examination performance data 22.

$$R = Nr/Nall$$

Nr: the number of analysis IDs 221 in which the re-examination presence or absence 224 of the examination performance data 22 is "presence"
Nall: the total number of analysis IDs 221 of the examination performance data 22

3-5-2. For Conditional Expression 1B

FIG. 8 is a Gantt chart showing an example of a progress of processing of an operation when the active examination is not executed. A time series of the processing shown in FIG. 8 is the same as that shown in FIG. 6.

Even when the active examination is not executed, when the dispensing step of an initial analysis of the re-examination can be started at a time point at which the dispensing step of the last analysis of the initial examination is ended, a useless waiting time is not generated in the operation of the analyzer 2. Therefore, for example, when the active examination is not executed in an operation in which the number of analyses is small, a waiting time may occur and the analysis time may be long.

As shown in FIG. 8, a time Ti from when the dispensing step of the initial examination is completed to when the dispensing step of the re-examination is started for the initial specimen I is represented by Ti = T1 + T2. In the initial examination, when the dispensing step of each analysis continues continuously longer than the time Ti, it is possible to transfer to the initial dispensing step of the re-examination at the time point at which the dispensing step of the last analysis of the initial examination is completed, and the useless waiting time is not generated in the operation of the analyzer 2.

Since a time from when the dispensing step of the initial specimen I is ended to when the dispensing step of the last specimen in the initial examination is ended is represented by T3 × (N1 - 1) similarly to Tc, the conditional expression 1B is derived from the condition of Ti > Tc.

The computer 1 executes the determination processing 12 in the processing device 10 according to the above conditions and determines the recommendation setting of enabling or disabling the active examination. In the present embodiment, the determination result is displayed on the operation terminal 3 for reference to the setting of enabling or disabling the active examination by the operator (FIG. 5). When the operator manually sets enabling or disabling the active examination function, data of the setting is transmitted to the analyzer 2 and the computer 1. In the analyzer 2, the active examination according to the data of the setting or a normal examination is executed to analyze the specimen. In the computer 1, the setting processing 11 is executed in the processing device 10, and the active examination setting data 21 is stored in the storage device 20.

4. Operation Method of Automatic Analyzer

In the case of the present embodiment, when the automatic analyzer is used, it is recommended to enable or disable the active examination function according to the recommendation setting determined in the determination processing 12 as described above. That is, when the analysis time is shortened when the active examination function is enabled (when the "active examination ON recommendation" is displayed in the active examination recommendation setting 112), the "active examination ON" is selected by the active examination setting radio button 111, and the active examination function of the analyzer 2 is enabled. Further, when the analysis time is not shortened even when the active examination function is enabled (when the "active examination OFF recommendation" is displayed in the active examination recommendation setting 112), the "active examination OFF" is selected by the active examination setting radio button 111 to disable the active examination function of the analyzer 2.

5. Effects

(1) In the present embodiment, whether the analysis time is shortened by enabling the active examination function is determined based on the examination performance data 22. In the case of the present embodiment, a result of the determination is output to the operation terminal 3 and is presented to the operator as the active examination recommendation setting 112 for causing the operator to know the recommendation setting of the active examination. When the operator enables the active examination function according to the presentation, the active examination is executed in the analyzer 2, and thus the analysis time may be shortened. On the other hand, when the user disables the active examination function according to the presentation, it is possible to prevent the execution of the re-examination beyond necessity in the analyzer 2 and to prevent generation of useless analysis time.

In this way, according to the present embodiment, it is possible to determine whether a re-examination needs to be executed together with the initial examination on the same specimen and to shorten the analysis time by preventing the execution of the re-examination beyond necessity. In addition, it is also possible to prevent wasting of consumables such as reagents by preventing the execution of the re-examination beyond necessity.

(2) The recommendation setting of the active examination is determined by the conditional expressions 1A and 1B described above. The conditional expressions 1A and 1B are simply constructed using the four arithmetic operations, and a calculation load of the computer 1 can be reduced.

However, the conditional expressions 1A and 1B are examples of the recommendation setting of the active examination, and the conditional expressions can be appropriately changed. Although the active examination is recommended when both the conditional expressions 1A and 1B are satisfied, a certain effect can be expected with a configuration in which the conditional expression 1B is omitted and the recommendation setting of the active examination is determined using only the conditional expression 1A.

(Second Embodiment)

In the first embodiment, an example in which the computer 1 displays the recommendation setting on the operation terminal 3 is described, but in the present embodiment, the computer 1 is configured to output, in the setting processing 11, a setting command of an active examination to the analyzer 2 as determination data in the determination processing 12. The setting command of the active examination is an enabling command for enabling the active examination function, or a disabling command for disabling the active examination function. When the determination data of the recommendation setting is displayed on the operation terminal 3, instead of display of the active examination recommendation setting 112 in FIG. 5, for example, whether the active examination function of the analyzer 2 is currently set to be enabled or disabled is displayed.

For example, in FIG. 1, when the computer 1 determines in the determination processing 12 that an analysis time is shortened by enabling the active examination function, the computer 1 outputs the enabling command to the analyzer 2 via the network interface 30 and the network 4. A control device of the analyzer 2 that receives the enabling command controls the analyzer 2 to execute the active examination.

On the other hand, when the computer 1 determines in the determination processing 12 that the analysis time is not shortened even when the active examination function is enabled, the computer 1 outputs the disabling command to the analyzer 2 via the network interface 30 and the network 4. The control device of the analyzer 2 that receives the disabling command controls the analyzer 2 to execute a normal examination (an examination in which a re-examination is executed on the same specimen when necessary according to a result of an initial examination).

In other respects, the present embodiment is the same as the first embodiment.

According to the present embodiment, even when an operator does not manually execute a setting operation, the enabling and disabling of the active examination function of the analyzer 2 are automatically switched according to a reservation situation of an analysis request. Accordingly, a labor of the operator can be reduced, and the active examination function can be appropriately and stably used even in a work situation in which the operator cannot set the active examination function at an appropriate time.

(Third Embodiment)

In a third embodiment, instead of the conditional expressions 1A and 1B, learned data based on performance data is used in the determination processing 12 as to whether an active examination needs to be enabled or disabled. ' The learned data (for example, a neural network) is generated by causing an AI program to execute machine learning on the performance data (the examination performance data 22 and the analysis time statistical data 23) as learning data, and a time required for an analysis is output from analysis request data. The learned data is stored in, for example, the storage device 20. The computer 1 uses the learned data to calculate analysis times when the active examination function is enabled and when the active examination function is disabled based on the analysis request data and executes the determination processing 12. Hereinafter, a specific example will be described.

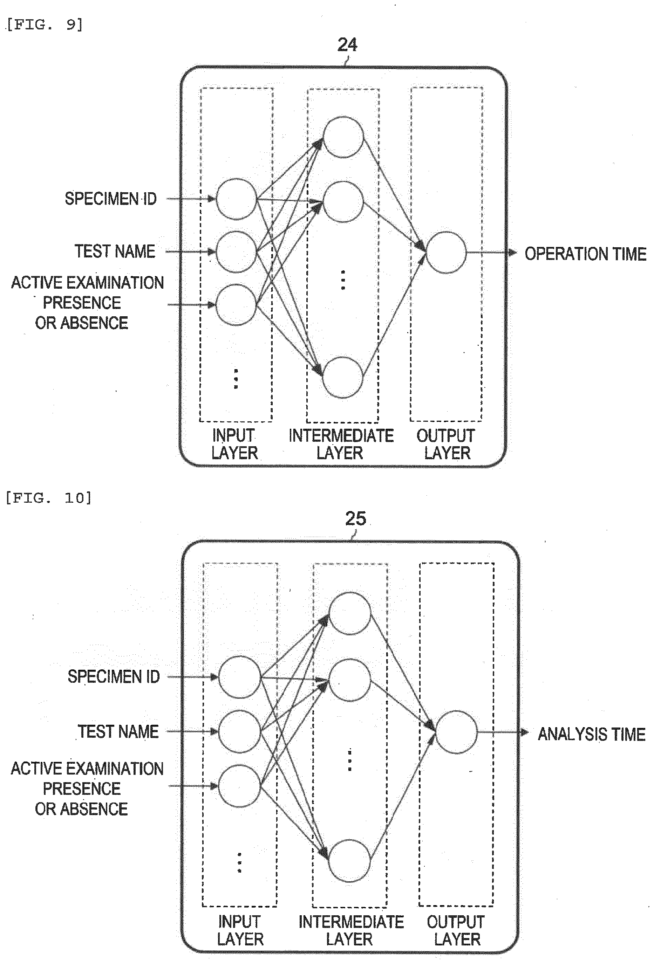

FIG. 9 is a conceptual diagram of the learned data.

The computer 1 searches for a record of the performance data by using the operation ID 225 as a key, and generates data for AI learning. For example, for each operation ID 225, the specimen ID 222, and the test name 223 are extracted from the examination performance data 22 and the active examination presence or absence 231 and the operation time 232 are extracted from the analysis time statistical data 23. A plurality of specimen IDs 222 and test names 223 may be extracted from the examination performance data 22 with the same operation ID 225 (FIG. 3). A data set for learning can be appropriately changed. The computer 1 executes machine-learning on the data set for each operation ID 225, generates a neural network 24 for estimating the operation time 232 based on the specimen ID 222, the test name 223, and the active examination presence or absence 231, and stores the generated neural network 24 in the storage device 20. The neural network 24 is not limited to one generated by the computer 1 and may be one generated by another computer.

The computer 1 uses the neural network 24 at the time of the determination processing 12 and estimates operation times when the active examination is enabled and disabled for the analysis request data (including one or more sets of data of the specimen ID and the test name) acquired from the analyzer 2. From a setting of enabling the active examination and a setting of disabling the active examination, a setting whose estimated operation time is shorted is determined as the recommendation setting. The computer 1 determines the recommendation setting in this way, presents the recommendation setting as recommendation information to the operator on the operation terminal 3 as in the first embodiment, or instructs the analyzer 2 to execute the setting as in the second embodiment.

In other respects, the present embodiment is the same as the first embodiment or the second embodiment. Also in the present embodiment, the same effects as those of the first embodiment or the second embodiment can be obtained. In addition, since the learned data can be updated every time the analysis is executed by the analyzer 2, estimation accuracy of the operation time is improved as the automatic analyzer is used.

(Fourth Embodiment)

A fourth embodiment is an example in which the determination processing 12 is executed using learned data based on performance data as in the third embodiment. The fourth embodiment is different from the third embodiment in that it is determined whether the active examination needs to be enabled or disabled for each set of the specimen ID 221 (patient) and the test name 223 when an analysis is executed. Hereinafter, a specific example will be described.

FIG. 10 is a conceptual diagram of the learned data.

The computer 1 searches for a record of the performance data by using the operation ID 225 as a key, and generates data for AI learning. In the present embodiment, for each operation ID 225, the specimen ID 222, the test name 223, and the analysis time 226 are extracted from the examination performance data 22, and the active examination presence or absence 231 is extracted from the analysis time statistical data 23. The computer 1 executes machine-learning on a data set for each operation ID 225, generates a neural network 25 for estimating the analysis time 226 based on the specimen ID 222, the test name 223, and the active examination presence or absence 231, and stores the generated neural network 25 in the storage device 20. The neural network 25 may be generated by another computer.

The computer 1 uses the neural network 25 at the time of the determination processing 12 and estimates analysis times when the active examination is enabled and when the active examination is disabled for the analysis request data (a set of the specimen ID and the test name) acquired from the analyzer 2. From a setting of enabling the active examination and a setting of disabling the active examination, a setting whose estimated operation time is shorted is determined as the recommendation setting for a target analysis. The computer 1 determines the recommendation setting in this way, presents the recommendation setting as recommendation information to the operator on the operation terminal 3 as in the first embodiment, or instructs the analyzer 2 to execute the setting as in the second embodiment.

In other respects, the present embodiment is the same as the first embodiment or the second embodiment. Also in the present embodiment, the same effects as those of the first embodiment or the second embodiment can be obtained. In addition, since the learned data can be updated every time the analysis is executed by the analyzer 2, estimation accuracy of the operation time is improved as the automatic analyzer is used.

(Modifications)

The accompanying drawings show specific examples according to the principles of the invention. However, the specific examples are for understanding the invention and are not intended to limit the invention. For example, in each of the embodiments described above, as shown in FIGS. 3 and 4, data having a table structure is exemplified, but the data structure is not limited to the table structure, and another data structure such as a list, a DB, or a queue may be used.

Reference Signs List

1: computer
2: analyzer
3: operation terminal
12: determination processing
21: active examination setting data (determination data)
22: examination performance data (performance data)
23: analysis time statistical data (performance data)
24, 25: neural network (learned data)
112: active examination recommendation setting (recommendation setting)
222: specimen ID
223: test name
226: analysis time (time required for analysis of specimen ID)
231: active examination presence or absence (whether active examination is executed)
N1: number of analyses in initial examination
N2: number of analyses in re-examination
T1: transport time
T2: reaction time
T3: dispensing time
Toff, Ton: entire required time (analysis time)

**Claims**

1.   An automatic analyzer comprising:

an operation terminal;
an analyzer having an active examination function of executing, in parallel with an initial examination, a re-examination possibly required after the initial examination on the same specimen; and
a computer configured to communicate with the analyzer, wherein
the computer is configured to

execute determination processing as to whether an analysis time is shorter when the active examination function is enabled than when the active examination function is disabled based on performance data of an examination executed in the past, and
output determination data of the determination processing to the operation terminal or the analyzer.

2.   The automatic analyzer according to claim 1, wherein

if a transport time per specimen is T1, a reaction time per specimen is T2, a dispensing time per specimen is T3, the number of analyses in the initial examination is N1, and the number of analyses in the re-examination is N2, the computer

determines that the analysis time is shortened when the active examination function is enabled if the following conditional expression is satisfied, and
determines that the analysis time is not shortened even when the active examination function is enabled if the conditional expression is not satisfied.

$$T1 + T2 + T3 \times (N2 + 1) > T3 \times N1 \times 2$$

**3.** The automatic analyzer according to claim 2, wherein
the number of analyses in the re-examination is an expected value calculated, based on the performance data, from a ratio of analyses that transition to the re-examination after the initial examination.

**4.** The automatic analyzer according to claim 1, wherein

if a transport time per specimen is T1, a reaction time per specimen is T2, a dispensing time per specimen is T3, the number of analyses in the initial examination is N1, and the number of analyses in the re-examination is N2, the computer

determines that the analysis time is shortened when the active examination function is enabled if both of the following two conditional expressions are satisfied, and
determines that the analysis time is not shortened even when the active examination function is enabled if at least one of the two conditional expressions is not satisfied.

$$T1 + T2 + T3 \times (N2 + 1) > T3 \times N1 \times 2$$

$$T1 + T2 > T3 \times (N1 - 1)$$

**5.** The automatic analyzer according to claim 4, wherein
the number of analyses in the re-examination is an expected value calculated, based on the performance data, from a ratio of analyses that transition to the re-examination after the initial examination.

**6.** The automatic analyzer according to claim 1, wherein

the computer is configured to output a recommendation setting of the active examination function to the operation terminal as the determination data, and
the computer

outputs the recommendation setting of recommending to enable the active examination function to the operation terminal if it is determined in the determination processing that the analysis time is shortened by enabling the active examination function, and
outputs the recommendation setting of recommending to disable the active examination function to the operation terminal if it is determined in the determination processing that the analysis time is not shortened even by enabling the active examination function.

**7.** The automatic analyzer according to claim 1, wherein

the computer is configured to output an enabling command for enabling the active examination function or a disabling command for disabling the active examination function to the analyzer as the determination data, and
the computer

outputs the enabling command to the analyzer if it is determined in the determination processing that the analysis time is shortened by enabling the active examination function, and
outputs the disabling command to the analyzer if it is determined in the determination processing that the analysis time is not shortened even by enabling the active examination function.

8. The automatic analyzer according to claim 1, wherein
the computer uses learned data obtained by machine learning based on the performance data, calculates analysis times when the active examination function is enabled and when the active examination function is disabled based on analysis request data, and executes the determination processing.

9. The automatic analyzer according to claim 1, wherein
the computer uses learned data obtained by performing machine learning on a data set included in the performance data, the data set including a specimen ID, a test name, whether the active examination is executed, and a time required for an analysis of the specimen ID, calculates analysis times when the active examination function is enabled and when the active examination function is disabled based on the specimen ID and the test name, and executes the determination processing.

10. An operation method of an automatic analyzer having an active examination function of executing, in parallel with an initial examination, a re-examination possibly required after the initial examination on the same specimen, the operation method of an automatic analyzer comprising:

determining whether an analysis time is shorter when the active examination function is enabled than when the active examination function is disabled based on performance data of an examination executed in the past;
enabling the active examination function if the analysis time is shortened by enabling the active examination function; and
disabling the active examination function if the analysis time is not shortened even by enabling the active examination function.

[FIG. 1]

[FIG. 2]

[FIG. 3]

| ANALYSIS ID | SPECIMEN ID | TEST NAME | RE-EXAMINATION PRESENCE OR ABSENCE | OPERATION ID | ANALYSIS TIME |
|---|---|---|---|---|---|
| 1 | 1 | A | PRESENCE | 1 | 10 MINUTES |
| 2 | 1 | B | ABSENCE | 1 | 30 MINUTES |
| 3 | 2 | A | PRESENCE | 2 | 9 MINUTES |
| 4 | 3 | B | ABSENCE | 2 | 10 MINUTES |

[FIG. 4]

| OPERATION ID | ACTIVE EXAMINATION PRESENCE OR ABSENCE | OPERATION TIME |
|---|---|---|
| 1 | PRESENCE | 1 HOUR AND 30 MINUTES |
| 2 | ABSENCE | 1 HOUR |
| 3 | PRESENCE | 30 MINUTES |
| 4 | ABSENCE | 45 MINUTES |

[FIG. 5]

110

111

ACTIVE
EXAMINATION SETTING

ACTIVE EXAMINATION
ON

ACTIVE EXAMINATION
OFF

112

ACTIVE EXAMINATION
RECOMMENDATION SETTING

ACTIVE EXAMINATION ON
RECOMMENDATION

[FIG. 6]

[FIG. 7]

[FIG. 8]

[FIG. 9]

[FIG. 10]

| | INTERNATIONAL SEARCH REPORT | International application No. |
| --- | --- | --- |
| | | **PCT/JP2022/034262** |

**A. CLASSIFICATION OF SUBJECT MATTER**

*G01N 35/02*(2006.01)i; *G01N 35/00*(2006.01)i
FI: G01N35/02 J; G01N35/00 A; G01N35/00 E

According to International Patent Classification (IPC) or to both national classification and IPC

**B. FIELDS SEARCHED**

Minimum documentation searched (classification system followed by classification symbols)

G01N35/02; G01N35/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 3-172764 A (SHIMADZU CORP) 26 July 1991 (1991-07-26) | 1-10 |
| A | JP 2014-70900 A (TOSHIBA CORP) 21 April 2014 (2014-04-21) | 1-10 |
| A | JP 63-229369 A (TOSHIBA CORP) 26 September 1988 (1988-09-26) | 1-10 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **28 October 2022** | **08 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/034262**

| Patent document cited in search report | | | Publication date (day/month/year) | Patent family member(s) | Publication date (day/month/year) |
|---|---|---|---|---|---|
| JP | 3-172764 | A | 26 July 1991 | (Family: none) | |
| JP | 2014-70900 | A | 21 April 2014 | (Family: none) | |
| JP | 63-229369 | A | 26 September 1988 | (Family: none) | |

Form PCT/ISA/210 (patent family annex) (January 2015)

**EP 4 411 383 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03172764 A